# FASCICULE DE BREVET EUROPEEN

(11) **EP 0 906 728 B1**
(45) Date de publication et mention de la délivrance du brevet: **21.12.2005**
(21) Numéro de dépôt: 98112453.0
(22) Date de dépôt: 06.07.1998
(51) Int. Cl.: A23C 11/04, A23L 1/40, A23C 9/15, A23F 5/40, A23L 1/30

(54) **Procédé de fabrication de lait en poudre, d'une formule diététique, d'un produit culinaire ou d'une base café**
Verfahren zur Herstellung eines Milchpulvers, einer Diätzusammensetzung, eines kulinarischen Produkts oder eines Kaffeeprodukts
Process for preparing milk powder, a dietetic formula, a culinary product or a coffee base

(30) Priorité: 10.07.1997 EP 97111697
(43) Date de publication de la demande: 07.04.1999
(73) Titulaire: SOCIETE DES PRODUITS NESTLE S.A., 1800 Vevey (CH)
(72) Inventeur: Kuslys, Martinas, 3506 Grosshoechstetten (CH); Nyfeler, Theodor, 3672 Oberdiessbach (CH); Nydegger, Martin, 3510 Konolfingen (CH); Meister, Niklaus, 3506 Grosshoechstetten (CH)
(74) Mandataire: Chautard, Cécile

(56) Documents cités:
- CH-A- 579 355
- GB-A- 1 399 650
- GB-A- 1 464 429
- US-A- 2 622 984
- US-A- 2 911 300
- US-A- 4 318 932
- US-A- 5 284 674

## Description

L'invention concerne un procédé de fabrication d'un lait en poudre recombiné, d'une formule diététique, d'un produit culinaire ou d'une base café.

Les poudres de lait recombinés sont normalement fabriqués en dissolvant tous les constituants en poudre dans de l'eau. Les huiles ou les graisses liquides sont ajoutés et le mélange est alors homogénéisé, évaporé et séché par pulvérisation. Ceci signifie que la partie non grasse d'un tel produit a été séchée deux fois.
Le but de la présente invention est de supprimer le second séchage par pulvérisation , car il est très onéreux. Différentes tentatives ont déjà été faites pour supprimer la seconde étape de séchage par pulvérisation. Le brevet US 4'318'932 concerne un procédé de fabrication d'un lait sec instantané, dans lequel on prépare une émulsion basée sur de la crème de lait et on mélange ensuite avec une base de poudre de lait dans une chambre d'agglomération spécifique. Selon ce procédé, il faut procéder à une homogénéisation à forte pression et opérer dans une chambre d'agglomération spécialement conçue pour le procédé. D'autre part, ce procédé ne permet pas d'obtenir une poudre finale ayant une teneur en matière grasse supérieure à 12 % et il est limité à l'utilisation d'une phase lipidique purement lactique.

Le brevet US 2'911'300 concerne également un procédé de préparation de poudre de lait recombiné. Le problème à la base de ce procédé est qu'il faut tout d'abord préparer la poudre de lait de manière spécifique avant de faire le mélange avec la phase lipidique, ce qui nécessite une installation spéciale d'agglomération de la poudre de lait, et d'autre part, après le mélange avec l'émulsion, on atteint des teneurs en eau élevées, qui nécessitent une forte dépense d'énergie pour le séchage.

Le but de la présente invention est de mettre au point un procédé dans lequel on peut opérer avec des installations classiques, sans avoir recours à un séchage par pulvérisation considéré comme cher dans l'état de la technique et dans lequel les paramètres physiques du procédé ménagent considérablement le produit à fabriquer. D'autre part, le but de l'invention est également de pouvoir préparer une poudre recombinée avec une teneur en matière grasse supérieure à 15 % et ne se limitant pas à une phase lipidique purement lactique. Le procédé selon l'invention permet d'obtenir une poudre qui lorsqu'on la reconstitue dans l'eau ne présente aucune remontée de matière grasse en surface et donne de bonnes caractéristiques de reconstitution.

L'invention concerne un procédé de fabrication d'un lait en poudre recombiné, d'une formule diététique, d'un produit culinaire ou d'une base café, dans lequel on incorpore de la matière grasse en dissolvant un émulsifiant dans de l'eau, on mélange cette solution avec une phase lipidique et on homogénéise de manière à former une émulsion stable ayant une teneur en lipides comprise entre 50 et 70 %, une teneur en eau de moins de 35 % et une teneur en émulsifiant comprise entre 1 et 5 %, on mélange ladite émulsion avec une composition choisie dans le groupe constitué par de la poudre de lait, une base pour formule diététique, de la soupe en poudre, de la sauce en poudre et de la poudre à base de café et on sèche pour obtenir une poudre ayant une teneur en eau de l'ordre de 2 à 5 %, dans lequel l'émulsifiant est choisi dans le groupe constitué par du caséinate de potassium ou de sodium, de la poudre de lait écrémé et de la poudre de babeurre doux.

Par poudre de lait , on entend, dans la présente description, une poudre de lait écrémée contenant des protéines lactique, des carbohydrates, par exemple des carbohydrates lactiques. On peut également utiliser seul ou en mélange une poudre de lait avec une teneur réduite en graisse, une poudre de petit lait, une crème lactique, un blanchisseur non lactique. Ces poudres de base peuvent également contenir un carbohydrate exogène, comme un mono- ou disaccharide, par exemple une maltodextrine. La crème lactique peut être un mélange de poudre de lait écrémé, maltodextrine, sérum lactique et caséinate : il est aussi possible d'avoir une crème lactique avec un seul ou plusieurs des composants précités. Par base pour formule diététique, on entend les constituants suivants, pris seuls ou en mélange : la poudre de lait écrémé, la poudre de petit lait, la poudre de sérum déminéralisé, ainsi que des sels minéraux et des vitamines. Comme exemple particulier d'une formule diététique, on peut citer de la poudre pour faire une formule infantile. Par soupe en poudre, on entend une poudre à base d'amidon, de poudre de lait, d'arôme, de sel, de légume deshydraté et de graisse. La sauce en poudre a la même composition que la soupe en poudre, mais avec une teneur en amidon plus élevée. Par poudre à base de café, on entend un mélange de café instantané avec un carbohydrate, tel que la maltodextrine et de la poudre de lait, des poudres de lactosérum ou des caséinates.

Il est essentiel selon l'invention de préparer l'émulsion avec une forte teneur en lipide (un ou plusieurs), avec un émulsifiant et de l'eau. Le but est que le mélange en aval avec la poudre de lait, la base pour formule diététique, la soupe en poudre, la sauce en poudre ou la poudre à base de café donne une teneur en eau, suffisamment basse permettant d'envisager un séchage autrement que par pulvérisation.

Pour la préparation de l'émulsion, on peut aussi bien envisager une graisse animale ou végétale ou une huile animale ou végétale, comme la graisse de lait, l'huile de palme, l'huile de soja. Si on utilise une graisse solide à la température ambiante, il faut la chauffer pour la mélanger avec la combinaison eau-émulsifiant. Dans le cas d'huile, on peut faire le mélange à température ambiante.

On utilise de préférence un émulsifiant lactique, à savoir du caséinate de potassium ou de sodium, de la poudre de lait écrémé ou de la poudre de babeurre doux à une teneur comprise entre 1 et 5 %. Il est également possible dans la préparation de l'émulsion d'ajouter du lactose avec l'émulsifiant de base, ou un autre carbohydrate.

Dans la préparation de l'émulsion, comme déjà mentionné précédemment, on utilise entre 50 et 70 % de phase lipidique, entre 1 et 5 % d'émulsifiant et moins de 35 % d'eau. Il est aussi possible de rajouter un carbohydrate exogène avant le mélange avec la phase lipidique. On peut également avoir avantage à effectuer une lécithination de l'émulsion.

L'homogénéisation de l'émulsion se fait dans un moulin colloïdal ou dans un homogénéisateur à une pression maximale de 300 bar. On travaille de préférence avec l'homogénéisateur.

Il est surprenant qu'on arrive à obtenir une émulsion totalement stable avec une telle teneur élévée en graisse et un émulsifiant aussi faible que la poudre de lait écrémé ou des caséinates. La taille moyenne des particules dans l'émulsion est de moins de 1 microns. L'émulsion peut être préparée en continu ou en discontinu. Si on travaille en continu, on règle le débit en fonction du rapport poudre/émulsion souhaité dans le système d'agglomération en aval.

L'émulsion ainsi formée est mélangée avec la poudre de lait, la base pour formule diététique, la soupe en poudre, la sauce en poudre ou la poudre à base de café dans un rapport poudre/émulsion en poids compris entre 1:1 et 6:1. Ce mélange peut être fait directement dans un mélangeur, dans une chambre avec ou sans tour d'agglomération et aussi lors du séchage ou dans un post-sécheur. On a constaté qu'il était préférable que le mélange se fasse dans une chambre d'agglomération. Le type de chambre d'agglomération utilisable n'est pas critique : on peut utiliser par exemple une chambre d'agglomération avec des couteaux rotatifs, mais également une chambre sans aucun élément en mouvement. On peut opérer aussi bien avec de la vapeur, que sans vapeur d'eau, de préférence sans vapeur.

Dans le cas du mélange avec une chambre d'agglomération, on travaille avec un débit qui est fonction de la taille de ladite chambre.

Le séchage est effectué soit par lit fluidisé, soit dans une tour d'agglomération, soit en combinant les deux techniques précédentes.

Lorsque le poudre est séchée à la teneur en eau normalement comprise entre 2 et 4 %, on effectue un tamisage de manière classique et les fines sont recyclées.

La poudre de lait qu'on mélange à l'émulsion peut être de la poudre de lait écrémé seule ou un mélange de poudre de lait écrémé et de poudre de babeurre ou de la poudre contenant de la poudre de lait, de la poudre de petit lait, du lactose ou d'autres ingrédients lactiques en combinaison avec des micro-nutriments, tels que des oligoéléments et des vitamines.

Dans un mode de réalisation plus spécifique, on mélange 70 % d'huile palme avec 27 % d'eau contenant 3 % de caséinate de potassium à une température légèrement supérieure à 40 °C, on homogénéise ledit mélange, on dose 33 % de cette pré-émulsion avec 44 % de lait écrémé et 23 % de poudre de babeurre dans une chambre d'agglomération et on sèche en lit fluidisé pour arriver à une teneur en eau de la poudre de l'ordre de 3 %.

Dans le mélange avant séchage, la teneur en eau ne dépasse pas 12 % et la teneur en lipides dans la poudre finale est supérieure à 15 %. La teneur en lipides dans la poudre finale est de préférence comprise entre 15 et 30 %.

En mettant en oeuvre le procédé selon l'invention, il est possible de produire des poudres de lait standard avec des équipements à faibles coûts. La reconstitution dans l'eau de ces poudres ne donne pas de formation apparente de couche de graisse libre en surface. On utilise selon l'invention uniquement des émulsifiants à base lactique, mais par contre s'agissant de la phase lipidique, il est possible d'y introduire des lipides d'origine non lactique.

Si on met en oeuvre le procédé selon l'invention avec la base pour formule diététique, la soupe en poudre, la sauce en poudre et la poudre à base de café, la préparation de l'émulsion se fait comme mentionné ci-dessus, l'émulsifiant est le même que ci-dessus, c'est-à-dire un émulsifiant lactique. Le mélange de l'émulsion et de la poudre se fait également dans une chambre d'agglomération dans le même rapport émulsion/poudre.

Le dispositif pour la mise en oeuvre du procédé se compose d'éléments connus. Au départ on mélange les différentes poudres telles que poudre de lait écrémé et poudre de babeurre avec un mélangeur disponible sur le marché. Le dosage du mélange de poudre se fait avec un système de dosage bi-vis, mais un autre système peut également être utilisé.

S'agissant de la préparation de l'émulsion, une pompe amène le mélange lipide/eau/émulsifiant vers le moulin colloïdal ou l'homogénéisateur.
Lors du mélange de l'émulsion avec la poudre, ledit mélange est fait de préférence dans une chambre d'agglomération. Celle-ci peut être du type avec des couteaux rotatifs tournant à une vitesse comprise entre 1700 et 3500 tours par minute. L'émulsion est injectée par une buse à une pression de l'ordre de 5 bar. On peut également utiliser une chambre d'agglomération sans aucune partie mobile. Ces différentes chambres d'agglomération sont connues dans la technique. Comme déjà mentionné précédemment, il est possible d'effectuer une lécithination pendant l'agglomération ou après.

Le séchage du mélange est effectué de préférence dans un système à lit fluidisé, par exemple avec un système à lit fluidisé vibrant ou selon toute autre technique connue de séchage.

La suite de la description est faite en référence aux exemples.

### Exemple 1

On dissout 3 kg de poudre de lait écrémé dans 27 kg d'eau pendant environ 5 minutes. La température de l'eau doit être supérieure à la température de fusion de l'huile de palme, à savoir 40 °C. 70 kg d'huile de palme liquide est ajoutée lentement à la solution agitée précédente pour former une pré-émulsion avec de gros globules de graisse. Le mélange est pompé à travers l'homogénéisateur et la pression est lentement augmentée à 200 bar.
L'émulsion est prête à être injectée dans la chambre d'agglomération. On opère de manière à avoir un débit de 200 kg/h de poudre de base (comprenant 35 % de poudre de babeurre pour 65 % de poudre de lait écrémé) et on injecte simultanément 80 kg/h d'émulsion. Le séchage se fait avec un lit fluidisé opérant à une température de 80 °C.
On obtient une poudre ayant une teneur en eau de 4,39 % et une teneur en graisse de 21,9 %. Le poids spécifique de la poudre est de 500 g/l. Lors de reconstitution dans l'eau, il n'y a aucune remontée visible de graisse en surface.

### Exemple 2

On opère comme dans l'exemple précédent, mais au lieu d'utiliser de la poudre de lait écrémé comme émulsifiant, on utilise du caséinate de potassium.On dissout 5 kg de caséinate de potassium et 10 kg de lactose dans 30 kg d'eau en agitant pendant 5 minutes. On mélange cette solution avec 55 kg d'huile de palme liquéfiée et on homogénéise comme précédemment.
On opère de manière à avoir un débit de 200 kg/h de poudre de base (comprenant 35 % de poudre de babeurre pour 65 % de poudre de lait écrémé) et on injecte simultanément 100 kg/h d'émulsion. On fait le séchage en lit fluidisé à une température de 80 °C.

On obtient une poudre ayant une teneur en humidité de 2,8 %, une teneur en lipides de 20 % et un poids spécifique de 500 g/l. Lors de la reconstitution dans l'eau, il n'y a aucune remontée visible de graisse en surface.

### Exemple 3

On dissout 3 kg de caséinate de potassium dans 27 kg d'eau et on ajoute lentement à la solution agitée précédente 70 kg d'huile de mais et d'huile de beurre (rapport 4:1) et on homogénéise comme précédemment.
On prépare à côté un mélange de poudre, comportant 64 kg de poudre de petit lait déminéralisé, 9 kg de poudre de lait écrémé, 11 kg de lactose et 2 kg de caséinate de potassium. On fait ensuite une agglomération dans le même dispositif que pour les exemples précédents avec un débit de poudre de 200 kg/h et d'émulsion de 110 kg/h.

### Exemple 4

On dissout 5 kg de caséinate de potassium et 10 kg de lactose dans 30 kg d'eau en agitant pendant 5 minutes et on ajoute lentement à la solution agitée précédente 55 kg d'huile de mais et d'huile de beurre (rapport 4:1) et on homogénéise comme précédemment.
On prépare à côté un mélange de poudre, comportant 120 kg de poudre de lait écrémé, 90 kg de lactose et 0,9 kg de micronutriments (mélange de vitamines et d'oligoéléments) On fait ensuite une agglomération avec un système à éléments fixes. L'émulsion est ainsi sprayée vers la périphérie du système dans un rideau tombant de poudre avec un débit de poudre de 200 kg/h et d'émulsion de 150 kg/h.

## Revendications

1. Procédé de fabrication d'un lait en poudre recombiné, d'une formule diététique, d'un produit culinaire ou d'une base café, dans lequel on incorpore de la matière grasse en dissolvant un émulsifiant dans de l'eau, on mélange cette solution avec une phase lipidique et on homogénéise de manière à former une émulsion stable ayant une teneur en lipides comprise entre 50 et 70 %, une teneur en eau de moins de 35 % et une teneur en émulsifiant comprise entre 1 et 5 %, on mélange ladite émulsion avec une composition choisie dans le groupe constitué par de la poudre de lait, une base pour formule diététique, de la soupe en poudre, de la sauce en poudre et de la poudre à base de café et on sèche pour obtenir une poudre ayant une teneur en eau de l'ordre de 2 à 5 %, dans lequel l'émulsifiant est choisi dans le groupe constitué par du caséinate de potassium ou de sodium, de la poudre de lait écrémé et de la poudre de babeurre doux.

2. Procédé selon la revendication 1, dans lequel la phase lipidique utilisée est une graisse animale ou végétale ou une huile animale ou végétale, comme la graisse du lait, l'huile de palme, l'huile de soja.

3. Procédé selon l'une des revendications 1 ou 2, dans lequel on fait l'homogénéisation dans un moulin colloïdal ou dans un homogénéisateur à une pression maximale de 300 bar.

4. Procédé selon l'une des revendications 1 à 3, dans lequel le mélange de la poudre de lait, de la base pour formule diététique, de la soupe en poudre, de la sauce en poudre ou de la poudre à base de café avec l'émulsion se fait dans une chambre d'agglomération dans un rapport poudre/émulsion compris entre 1:1 et 6:1.

5. Procédé selon l'une des revendications 1 à 4, dans lequel la poudre de lait résulte d'un mélange de poudre de lait écrémé et de poudre de babeurre.

6. Procédé selon l'une des revendications 1 à 5, dans lequel on mélange 70 % d'huile de palme avec 27 % d'eau contenant 3 % de caséinate de potassium, on homogénéise ledit mélange, on dose 33 % de cette émulsion avec 44 % de lait écrémé et 23 % de poudre de babeurre dans une chambre d'agglomération et on sèche en lit fluidisé pour arriver à une teneur en eau de la poudre de l'ordre de 3 %.

## Patentansprüche

1. Verfahren zur Herstellung einer rekombinierten Pulvermilch, einer diätetischen Zusammensetzung, eines Nahrungsmittelprodukts oder einer Kaffeegrundlage, bei dem man Fett einarbeitet, indem man einen Emulgator in Wasser löst, diese Lösung mit einer Lipidphase mischt und so homogenisiert, dass eine stabile Emulsion mit einem Gehalt an Lipiden zwischen 50 und 70 %, einem Wassergehalt von weniger als 35 % und einem Gehalt an Emulgator zwischen 1 und 5 % gebildet wird, man diese Emulsion mit einer Zusammensetzung mischt, die aus der Gruppe ausgewählt ist, die aus Milchpulver, einer Grundlage für eine diätetische Zusammensetzung, Pulversuppe, Pulversauce und Pulver auf Kaffeebasis besteht, und trocknet, um ein Pulver mit einem Wassergehalt von etwa 2 bis 5 % zu erhalten, bei dem der Emulgator aus der Gruppe ausgewählt ist, die aus Kalium- oder Natriumcaseinat, Magermilchpulver und süßem Buttermilchpulver ausgewählt ist.

2. Verfahren nach Anspruch 1, bei dem die verwendete Lipidphase ein tierisches oder pflanzliches Fett oder ein tierisches oder pflanzliches Öl, wie Milchfett, Palmöl, Sojaöl, ist.

3. Verfahren nach einem der Ansprüche 1 oder 2, bei dem man die Homogenisierung in einer Kolloidmühle oder in einem Homogenisator bei einem Höchstdruck von 300 bar durchführt.

4. Verfahren nach einem der Ansprüche 1 bis 3, bei dem die Mischung von Milchpulver, Grundlage für eine diätetische Zusammensetzung, Pulversuppe, Pulversauce oder Pulver auf Kaffeebasis mit der Emulsion in einer Agglomerationskammer in einem Verhältnis Pulver/Emulsion von 1:1 bis 6:1 stattfindet.

5. Verfahren nach einem der Ansprüche 1 bis 4, bei dem das Milchpulver sich aus einer Mischung von Magermilchpulver und Buttermilchpulver ergibt.

6. Verfahren nach einem der Ansprüche 1 bis 5, bei dem man 70 % Palmöl mit 27 % Wasser, das 3 % Kaliumcaseinat enthält, mischt, diese Mischung homogenisiert, 33 % dieser Emulsion mit 44 % Magermilch und 23 % Buttermilchpulver in einer Agglomerationskammer zudosiert und im Fließbett trocknet, um zu einem Wassergehalt des Pulvers von etwa 3 % zu kommen.

## Claims

1. Process for preparing a recombined milk powder, a dietetic formula, a culinary product or a coffee base, wherein fat is incorporated by dissolving an emulsifier in water, this solution is mixed with a lipid phase and homogenization is carried out so as to form a stable emulsion having a lipid content between 50 and 70 %, a water content below 35 % and an emulsifier content between 1 and 5 %, the said emulsion is mixed with a composition chosen from the group consisting of milk powder, a base for a dietetic formula, soup powder, sauce powder and coffee-based powder, and drying is carried out so as to obtain a powder having a water content of the order of 2 to 5 %, wherein the emulsifier is chosen from the group consisting of potassium or sodium caseinate, skimmed milk powder and unacidified buttermilk powder.

2. Process according to claim 1, wherein the lipid phase used is an animal or vegetable fat or an animal or vegetable oil, such as milk fat, palm oil or soya oil.

3. Process according to either of claims 1 or 2, wherein homogenization is carried out in a colloid mill or in a homogenizer at a maximum pressure of 300 bar.

4. Process according to one of claims 1 to 3, wherein the milk powder, the base for a dietetic formula, the soup powder, the sauce powder or the coffee-based powder are mixed with the emulsion in an agglomeration chamber in a powder/emulsion ratio of between 1:1 and 6:1.

5. Process according to one of claims 1 to 4, wherein the milk powder results from mixing skimmed milk powder and buttermilk powder.

6. Process according to one of claims 1 to 5, wherein 70% palm oil is mixed with 27% water containing 3% potassium caseinate, the said mixture is homogenized, 33% of this emulsion is dosed with 44% skimmed milk and 23% buttermilk powder in an agglomeration chamber and drying is carried out in a fluidized bed to arrive at a water content of the powder of the order of 3 %.
